(19) **Europäisches Patentamt**

**European Patent Office**

**Office européen des brevets**

(11) **EP 1 303 421 B1**

(12) **EUROPÄISCHE PATENTSCHRIFT**

(45) Veröffentlichungstag und Bekanntmachung des Hinweises auf die Patenterteilung:
**17.03.2004 Patentblatt 2004/12**

(51) Int Cl.⁷: **B60K 41/00**, B60K 31/00, B60T 7/22, B62D 6/00

(21) Anmeldenummer: **01949491.3**

(22) Anmeldetag: **12.07.2001**

(86) Internationale Anmeldenummer:
**PCT/EP2001/008060**

(87) Internationale Veröffentlichungsnummer:
**WO 2002/008010 (31.01.2002 Gazette 2002/05)**

(54) **AUTOMATISCHES BREMS- UND LENKSYSTEM FÜR EIN FAHRZEUG**

AUTOMATIC BRAKE AND STEERING SYSTEM FOR A VEHICLE

SYSTEME AUTOMATIQUE DE FREINAGE ET DE PILOTAGE POUR UN VEHICULE

(84) Benannte Vertragsstaaten:
**DE ES FR GB IT**

(30) Priorität: **26.07.2000 DE 10036276**

(43) Veröffentlichungstag der Anmeldung:
**23.04.2003 Patentblatt 2003/17**

(73) Patentinhaber: **DaimlerChrysler AG**
**70567 Stuttgart (DE)**

(72) Erfinder:
- **DUDECK, Ingo**
 **71384 Weinstadt (DE)**
- **FREITAG, Rainer**
 **73277 Owen (DE)**
- **KURZ, Gerhard**
 **73240 Wendlingen (DE)**
- **LAUER, Wofgang**
 **74074 Heilbronn (DE)**
- **RÖHRIG-GERICKE, Thomas**
 **71093 Weil im Schönbuch (DE)**
- **SCHÖB, Reinhold**
 **71126 Gäufelden (DE)**
- **TRÖSTER, Harry**
 **71732 Tamm (DE)**
- **YAP, Andy**
 **71034 Böblingen (DE)**
- **ZIMMER, Richard**
 **70734 Fellbach (DE)**

(56) Entgegenhaltungen:
**EP-A- 0 582 236    EP-A- 0 891 903**
**EP-A- 0 967 121    EP-A- 0 991 045**
**US-A- 5 332 057    US-A- 6 026 347**

**Beschreibung**

Die Erfindung betrifft ein automatisches Brems- und Lenksystem für ein Fahrzeug nach dem Oberbegriff des Anspruches 1, das aus der US 6 026 347 A bekannt ist.

Aus der Druckschrift DE 40 39 005 A1 ist ein Steuersystem für ein Fahrzeug bekannt, welches eine Sensoranordnung, eine zentrale Regel- und Steuereinheit sowie eine Mehrzahl von Stelleinrichtungen für diverse, den Fahrzeugzustand beeinflussende Aggregate eines Fahrzeugs umfasst. Über die Sensoranordnung werden vom Fahrer durchgeführte Aktivitäten registriert, insbesondere eine Brems- und eine Lenkbetätigung des Fahrers, sowie Fahrzeugzustandsgrößen wie zum Beispiel die Fahrzeuggeschwindigkeit und die Raddrehgeschwindigkeiten ermittelt. Die ermittelten Signale werden gemäß einer hinterlegten Berechnungsvorschrift in der Regel- und Steuereinheit verarbeitet, in der Stellsignale erzeugt werden, die den Stelleinrichtungen der Fahrzeugaggregate zur Manipulation des Fahrzeugzustandes zugeführt werden. Die zu beeinflussenden Aggregate umfassen unter anderem das Fahrzeuggetriebe, eine Lenksteuereinrichtung sowie eine Bremseinrichtung.

Dieses Steuersystem hat den Nachteil, dass nur Aktivitäten des Fahrers und der Fahrzeugzustand erfasst werden können, nicht jedoch Vorgänge und Zustände, welche außerhalb des Fahrzeuges stattfinden bzw. existieren. Es ist daher nicht möglich, eventuelle Hindernisse auf der Fahrbahn zu erfassen und Maßnahmen zur Kollisionsvermeidung zu ergreifen. Mit dem Steuersystem der DE 40 39 005 A1 kann ein selbsttätiges, autonomes Fahren nicht realisiert werden.

Aus der Druckschrift WO 90/02985 A1 ist ein Verfahren und eine Vorrichtung zur automatischen Kollisionsvermeidung für Fahrzeuge bekannt, welches bzw. welche eine vorausschauende Erfassung eines Hindernisses beinhaltet, wobei im Falle eines erkannten Hindernisses ein kollisionsvermeidendes Ausweichmanöver durchgeführt wird. Im Falle eines Hindernisses wird gemäß einer in der Regel- und Steuereinheit hinterlegten Ausweichstrategie eine Ausweichbahn errechnet. Die Stelleinrichtung für die Lenkung wird in der Weise beaufschlagt, dass das Fahrzeug der Ausweichbahn folgt und das Hindernis umfährt.

Es ist zwar mit dem Brems- und Lenksystem der WO 90/02985 A1 möglich, in vorausschauender Weise Kollisionen mit Hindernissen zu vermeiden, indem Brems- und Ausweichmanöver durchgeführt werden. Nachteilig ist jedoch, dass die Ausweichstrategie keine Alternativen für den Fall enthält, dass während des Ausweichmanövers weitere, unerwartete Hindernisse auftauchen.

Der Erfindung liegt das Problem zu Grunde, ein Fahrzeugsystem zu schaffen, mit dem mit größtmöglicher Sicherheit automatische Ausweichmanöver durchgeführt werden können.

Dieses Problem wird erfindungsgemäß mit den Merkmalen des Anspruches 1 gelöst.

Bei dem neuartigen automatischen Brems- und Lenksystem wird zumindest für den Fall, dass im Ausweichweg ein weiteres Hindernis entdeckt wird, die Berechnung eines alternativen Ausweichwegs nochmals durchgeführt, um eine Alternativroute zur Umgehung des weiteren Hindernisses zu erhalten. Falls die Alternativroute ein gefahrloses Umfahren des Hindernisses ermöglicht, werden die Aggregate des Fahrzeugs mit entsprechenden Stellsignalen beaufschlagt, um der Alternativroute zu folgen. Falls jedoch die Alternativroute ein gefahrenfreies Ausweichen nicht ermöglicht, wird gemäß einer hinterlegten Optimierungsstrategie vorteilhaft diejenige Ausweichroute gewählt, bei der der zu erwartende Schaden am geringsten ist. Zweckmäßig wird für jede ermittelte Ausweichroute die Differenz von verbleibendem Bremsweg und verbleibender Distanz zum Hindernis - ausgehend von der aktuellen Fahrzeugposition - ermittelt und diejenige Ausweichroute eingeschlagen, bei der die Differenz von Bremsweg und Distanz am geringsten ist.

Alternativ zu der Optimierungsstrategie der minimalen Differenz von verbleibendem Bremsweg und verbleibender Distanz zum Hindernis können aber auch sonstige Optimierungskriterien angewandt werden. Es kann insbesondere zweckmäßig sein, dass Randbedingungen bei der Bestimmung der Ausweichroute berücksichtigt werden, welche sich aus der Topologie des umliegenden Geländes ergeben. Derartige Randbedingungen können beispielsweise durch die Bestimmung der Absolutposition des Fahrzeugs mittels eines Positionsbestimmungssystems unter Berücksichtigung der aus einer elektronischen Straßenkarte bekannten Topologie definiert werden.

Auf der Grundlage der Ausweichstrategie ist sicher gestellt, dass für den Fall, dass eine Kollision nicht zu vermeiden ist, diejenige Route gewählt wird, bei der das Fahrzeug bei Erreichen des Hindernisses den geringsten verbleibenden Bremsweg aufweist, so dass auch die Fahrzeuggeschwindigkeit im Moment des Aufpralls minimiert und dementsprechend auch der Schaden so gering wie möglich gehalten wird.

In einer zweckmäßigen Weiterbildung werden zusätzliche Randbedingungen in der Umgebung berücksichtigt, welche über die . Sensoreinheit des Brems- und Lenksystems erfasst werden können. Diese zusätzlichen Randbedingungen, welche insbesondere charakteristische Merkmale der Umgebung beschreiben, werden in die Ausweichstrategie mit einbezogen, um sicher zu stellen, dass die Ausweichroute des Fahrzeugs nicht zu einem größeren Schaden führt als das Verbleiben auf der bisherigen Fahrstrecke. Über die Formulierung der Randbedingungen können zusätzliche, sicherheitsrelevante Aspekte bei der Routenwahl berücksichtigt werden. So ist es beispielsweise möglich, die Hindernisse, welche über die Sensoreinheit erfassbar sind, in unterschiedliche Kategorien einzuteilen, wobei Kategorien von Hindernissen definierbar sind, mit denen eine Kollision unbedingt zu vermeiden ist. Dies betrifft insbesondere Personen auf der Fahrbahn bzw. auf der Ausweichroute.

Als Randbedingung kann auch berücksichtigt werden, dass der Ausweichweg nicht auf die Gegenfahrbahn führen darf. Dies gilt insbesondere für den Fall, dass bei einem Ausweichen auf die Gegenfahrbahn eine Gefährdung des eigenen Fahrzeugs oder eines fremden Fahrzeugs zu befürchten ist, beispielsweise, falls auf der Gegenfahrbahn während des Ausweichvorganges Gegenverkehr herrscht, was insbesondere durch die Sensoreinheit zu erfassen ist.

Um ein Hindernis über die Ausweichroute umgehen zu können, muss das Lenksystem des Fahrzeuges manipuliert werden. Für den Fall jedoch, dass die Lenk-Stelleinrichtung ausfällt, wird zweckmäßig eine Ersatzstrategie verfolgt, welche die verbleibenden, noch intakten Fahrzeugaggregate im Hinblick auf eine Schadensminimierung einsetzt. Hierzu werden insbesondere die die Fahrzeug-Längsdynamik beeinflussenden Aggregate des Fahrzeuges manipuliert, zweckmäßig im Hinblick auf eine optimale Verzögerung mit minimalem Bremsweg.

Gemäß einer weiteren bevorzugten Ausführung ist im Fahrzeug ein Mitteilungssystem, insbesondere eine grafische Anzeige vorgesehen, auf dem bzw. auf der die tatsächliche Fahrzeugposition und die Sollposition darstellbar sind, welche gemäß der Ausweichstrategie ermittelt worden ist. Dem Fahrer wird hierdurch mitgeteilt, ob das Fahrzeug sich im Gefahrenfalle tatsächlich auf der optimalen Route - dem Ausweichweg - befindet. Dies bietet insbesondere für den Fall Vorteile, dass das selbsttätige Führen des Fahrzeuges über den Ausweichweg nicht bzw. nicht vollständig funktioniert oder aber dass eine derartige automatische Steuerung noch nicht bzw. noch nicht vollständig realisiert worden ist. In diesem Fall kann der Fahrer auf Grund der ihm mitgeteilten Information über Ist- und Soll-Position des Fahrzeugs, insbesondere an Hand der grafischen Darstellung, selbsttätig Lenk- und Bremsmanöver einleiten und durchführen, um die angezeigte Sollposition des Fahrzeugs erreichen bzw. einhalten zu können.

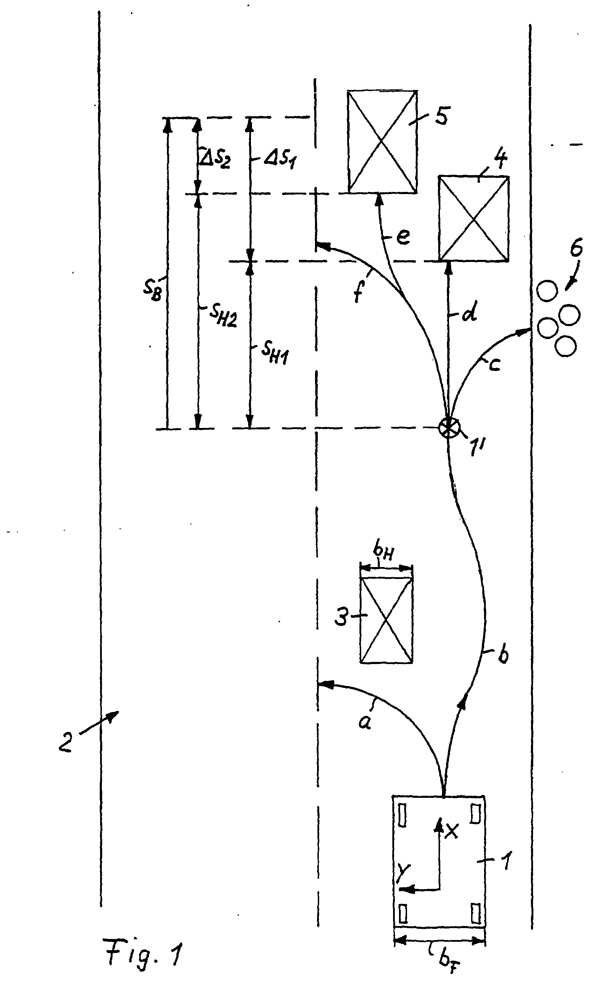

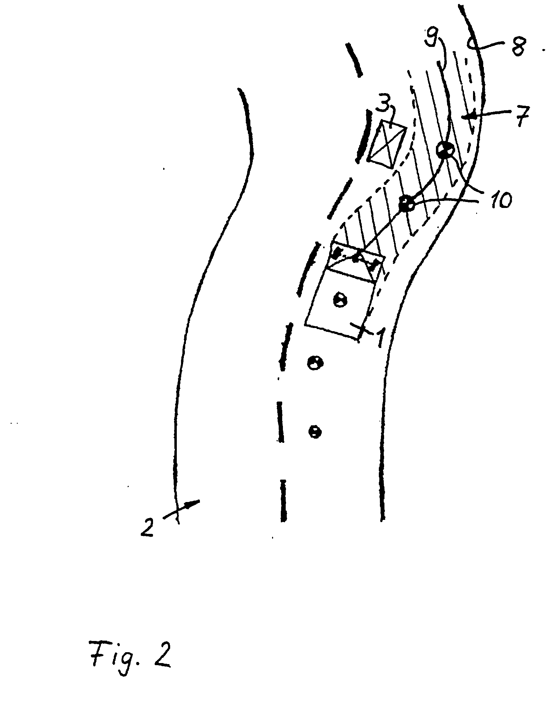

Weitere Vorteile und zweckmäßige Ausführungsformen sind den weiteren Ansprüchen, der Figurenbeschreibung und den Zeichnungen zu entnehmen. In Fig. 1 sind verschiedene Ausweichrouten eines Fahrzeugs auf einer Straße zur Umgehung von mehreren Hindernissen dargestellt, Fig. 2 zeigt ein Fahrzeug mit einem Bereich möglicher Solltrajektorien für die weitere Fahrt des Fahrzeugs unter Berücksichtigung eines Hindernisses im Fahrzeugweg und der seitlichen Straßenbegrenzung.

In Fig. 1 ist ein Fahrzeug 1 auf der rechten Fahrbahnhälfte einer Straße 2 dargestellt. Das Fahrzeug 1 sei mit einem automatischen Brems- und Lenksystem ausgestattet, welches ein selbsttätiges Bremsen und Lenken des Fahrzeuges in Abhängigkeit von Vorgängen, Zuständen, Ereignissen und Aktivitäten sowohl außerhalb als auch innerhalb des Fahrzeuges ermöglicht. Die das Brems- und Lenksystem beeinflussenden Größen umfassen insbesondere Fahrzeug-Zustandsgrößen, beispielsweise die Fahrzeuggeschwindigkeit und die Lenkgeschwindigkeit, Fahrzeug-Betriebs- oder -Kenngrößen, beispielsweise den Radstand, aber auch Signale, welche von einer Sensoreinheit stammen, über die die Umgebungsbedingungen festzustellen sind, beispielsweise Hindernisse auf oder am Rande der Fahrbahn oder wetterbedingte Einflüsse. Die Sensoreinheit bildet einen Bestandteil des Brems- und Lenksystems, dem darüber hinaus eine Regel- und Steuereinheit zugeordnet ist, in welcher in Abhängigkeit der Fahrzeug-Zustandsgrößen und der Umgebungsbedingungen Stellsignale erzeugt werden können. Diese Stellsignale werden mit Hilfe von Signalübertragungseinrichtungen diversen Stelleinrichtungen zur Einstellung der Fahrzeugbremse und/oder der Fahrzeuglenkung zugeführt, gegebenenfalls auch weiteren den Fahrzeugzustand beeinflussenden Aggregaten, insbesondere Zündung und Einspritzung der Brennkraftmaschine des Fahrzeugs.

Im Falle eines Hindernisses, welches den Fahrweg des Fahrzeugs blockiert oder zumindest mit nicht ausreichendem Sicherheitsabstand im Fahrweg des Fahrzeugs liegt und welches mittels der Sensoreinheit detektiert werden kann, werden gemäß hinterlegten Berechnungsvorschriften in der Regel- und Steuereinheit in Abhängigkeit der Fahrzeug-Zustandsgrößen und der Umgebungsbedingungen Ausweichmanöver ermittelt, um eine Kollision mit dem Hindernis bzw. eine Gefährdung des Fahrzeugs zu vermeiden.

Im Ausführungsbeispiel befindet sich auf der Fahrbahn ein Hindernis 3, welches im Fahrweg des Fahrzeugs 1 liegt, so dass das Fahrzeug 1 ein Ausweichmanöver durchführen muss, um eine Kollision mit dem oder eine Gefährdung durch das Hindernis 3 zu vermeiden. Das Hindernis 3, das über die Sensoreinheit des Brems- und Lenksystems des Fahrzeug 1 entdeckt werden kann, beispielsweise durch ein im Fahrzeug 1 mitgeführtes Radarsystem, zwingt das Fahrzeug 1 auf Ausweichrouten, welche unter Beachtung zusätzlicher Randbedingungen, insbesondere unter Beachtung sicherheitsrelevanter Kriterien, auszuwählen sind.

Bei dem in Fahrtrichtung vor dem Fahrzeug 1 gelegenen Hindernis 3 kommen zwei Ausweichrouten a und b in Betracht, die links bzw. rechts am Hindernis 3 vorbeiführen. Um zu vermeiden, dass eine einzuschlagende Ausweichroute zu einer weiteren Gefährdung des Fahrzeug 1 führt, werden Randbedingungen vorgegeben, die bei der Auswahl der Ausweichroute zu beachten sind. Als Randbedingung wird insbesondere berücksichtigt, dass die Ausweichroute nicht auf die Gegenfahrbahn führen darf, um eine Kollision mit Gegenverkehr auszuschließen. Diese Randbedingung kann jedoch gegebenenfalls dahingehend eingeschränkt werden, dass ein Ausweichen auf die Gegenfahrbahn nur für den Fall verboten ist, dass auch tatsächlich Gegenverkehr herrscht; dies setzt jedoch leistungsfähige, weit voraus schauende Sensoreinrichtungen im Fahrzeug 1 und im Übrigen weitere günstige Umgebungsbedingungen voraus, insbesondere einen überschaubaren Streckenverlauf.

Ein zusätzliches zu berücksichtigendes Kriterium bei der Festlegung der Ausweichroute ist die Kurvenkrümmung der Ausweichroute, welche insbesondere in Abhängigkeit der Fahrzeuglängsgeschwindigkeit in der Weise gewählt werden muss, dass keine unzulässig hohen Querbeschleunigungen am Fahrzeug auftreten.

Sobald im Brems- und Lenksystem erkannt wird, dass im aktuellen Fahrweg ein Hindernis steht, werden der hinterlegten Ausweichstrategie entsprechend Ausweichrouten ermittelt. Die theoretisch möglichen Ausweichrouten führen links und rechts am Hindernis vorbei, im Ausführungsbeispiel sind dementsprechend zwei links und rechts am Hindernis 3 vorbeiführende Ausweichrouten a und b eingezeichnet, auf denen das Fahrzeug 1 das Hindernis 3 theoretisch umfahren kann. Die Ausweichroute a kann jedoch im Ausführungsbeispiel auf Grund einer einschränkenden Randbedingung nicht durchgeführt werden, da diese Route a auf die Gegenfahrbahn führt, was in der Regel nicht gestattet ist. Der einzige, das Hindernis 3 umgehende Weg ist die Ausweichroute b, welche rechts am Hindernis 3 vorbeiführt.

Im Brems- und Lenksystem des Fahrzeug 1 wird vorteilhaft permanent, insbesondere in kurzen zyklischen Abständen, die Umgebung sensiert und auf der Grundlage dieser, über die Sensoreinheit aufgenommenen Umgebungsdaten werden permanent bzw. zyklisch weitere Fahrstrategien ermittelt und gegebenenfalls auch durchgeführt. Falls keine weiteren Hindernisse oder Störungen auftreten, wird die Ausweichroute zweckmäßig in der Weise gewählt, dass in Lateralrichtung nach dem Beenden des Ausweichmanövers die ursprüngliche Lateralposition des Fahrzeugs 1 in Bezug auf den Fahrbahnrand wieder erreicht wird.

Falls ein Ausweichmanöver durchgeführt werden muss, wird die Querkomponente y des Ausweichwegs vorteilhaft als Klothoide gemäß der Funktion

$$y = \int ( v^2(t) \, \dot\Theta(t) \, t^2 )/L \, dt$$

in Abhängigkeit der Fahrzeug-Längsgeschwindigkeit v, der Lenkgeschwindigkeit $\dot\Theta$, des Radstandes L und der Zeit t-gemessen ab Beginn des Ausweichmanövers - berechnet. Es ist zu beachten, dass die Mindest-Lateralkomponente $y_{min}$ des Ausweichwegs für eine sichere Umfahrung des Hindernisses zweckmäßig bestimmt wird durch die Addition von halber Hindernisbreite $b_H$ und halber Fahrzeugbreite $b_F$ gemäß dem Zusammenhang

$$y_{min} = 1/2 \, (b_H + b_F) \, ,$$

wobei gegebenenfalls ein zusätzlicher seitlicher Sicherheitsabstand zu berücksichtigen ist.

Die Längskomponente x des Ausweichwegs wird gemäß der Beziehung

$$x = \int v(t) \, dt$$

in Abhängigkeit der Fahrzeuggeschwindigkeit v bestimmt.

Alternativ zur Klothoide kann auch eine kubische Parabel als Ausweichfunktion gewählt werden.

In der Figur ist ein weiterer Fall mit einer Mehrzahl von Hindernissen im Fahrweg d des Fahrzeugs dargestellt, ausgehend von einer Fahrzeugposition 1' des Fahrzeugs. In Geradeausrichtung befindet sich im Fahrweg des Fahrzeugs ein Hindernis 4. Seitlich und in Längsrichtung mit größerem Abstand zum Fahrzeug versetzt liegt ein weiteres Hindernis 5, am Wegesrand außerhalb der Straße 2 befinden zusätzliche Einzelhindernisse 6. Ausgehend von der eingezeichneten Position 1' wird das Fahrzeug nach dem Erkennen des unmittelbar in der Fahrspur d liegenden Hindernisses 4 Ausweichmanöver bzw. Ausweichrouten c und e ermitteln, welche rechts bzw. links am Hindernis 4 vorbeiführen.

Bei der Festlegung der letztlich durchzuführenden Ausweichroute werden zunächst diejenigen Alternativen ausgesondert, welche mit zusätzlich zu beachtenden Randbedingungen unverträglich sind. Als derartige Randbedingungen können die Hindernisse in abgestufte Kategorien unterteilt sein, welche mit einem unterschiedlich hohen Gefährdungsgrad für das eigene Fahrzeug oder aber für außenstehende Personen oder Gegenstände bewertet werden. Auf diese Art und Weise ist es möglich, Personen, die sich außerhalb des betrachteten Fahrzeugs befinden, beispielsweise am Wegesrand stehen und von der Sensoreinheit als Personen identifiziert werden, in eine Hinderniskategorie einzustufen, mit denen eine Kollision unter allen Umständen vermieden werden muss. Durch die Einteilung und Bewertung in verschiedene Kategorien kann eine Vorsortierung unter mehreren ermittelten Ausweichrouten getroffen werden.

Im Ausführungsbeispiel kann es sich bei dem Hindernis 6 um einzelne Personen handeln, so dass ein Ausweichen über die Route c nicht möglich ist.

Als weitere Alternativen verbleiben - ausgehend von der Fahrzeugposition 1' - die Route d, welche dem regulären Fahrweg entspricht und zu einer Kollision mit dem Hindernis 4 führt, sowie die Ausweichroute e, die jedoch im weiteren Verlauf ebenfalls zu einer Kollision mit dem weiter entfernt liegenden Hindernis 5 führen würde. Da die Ausweichroute c definitiv ausgeschieden ist, muss eine Auswahl unter den verbliebenen Routen d und e getroffen werden. Als Auswahlkriterium wird zunächst der Abstand zwischen aktueller Fahrzeugposition 1' und den Hindernissen 4 und 5 in Längsrichtung x bestimmt. Der Abstand zwischen Fahrzeugposition 1' und dem näher liegenden Hindernis 4 beträgt $s_{H1}$, der Abstand zum weiter entfernt liegenden Hindernis 5 beträgt $s_{H2}$. Zugleich wird in der Regel- und Steuereinheit des Brems- und Lenksystems der noch verbleibende Mindest-Bremsweg $s_B$ bestimmt, welcher ausgehend von der aktuellen Fahrzeugposition 1' in Längsrichtung x bis zum vollständigen Fahrzeugstillstand voraussichtlich erforderlich ist. Falls der verbleibende Bremsweg $s_B$ den für eine hindernisfreie Fahrt zur Verfügung stehenden Abstand $s_{H1}$ und $s_{H2}$ bis zu den Hindernissen übersteigt und demzufolge ein kollisionsfreier Ausweichweg ausgehend von der Fahrzeugposition 1' nicht aufzufinden ist, wird nun als Kriterium für die Auswahl unter den verbleibenden Routen d und e derjenige Ausweichweg gewählt, bei dem die Differenz von Bremsweg $s_B$ und Distanz $s_{H1}$ bzw. $S_{H2}$ zum jeweiligen Hindernis 4 bzw. 5 am geringsten ist. Diese Differenz, die mit $\Delta s_1$ und $\Delta s_2$ bezeichnet wird, ist auf Grund des größeren Längsabstandes des Hindernisses 5 zur aktuellen Fahrzeugposition 1' für das Hindernis 5 am geringsten, dementsprechend wird die Ausweichroute e gewählt. Auf Grund der größeren Distanz zum Hindernis 5 wird das Fahrzeug auf eine geringere Geschwindigkeit verzögert sein als bei Annäherung an das Hindernis 4 auf der Route d, die Schäden bei einem Aufprall auf das Hindernis 5 werden geringer sein als die Schäden bei einem Aufprall auf das nähere Hindernis 4.

Nachdem das Fahrzeug ausgehend von der Position 1' die Ausweichroute e eingeschlagen hat, wird permanent in zyklischen Abständen nach weiteren Ausweichrouten gefahndet. Hierbei können sich weitere Alternativen ergeben, beispielsweise eine Ausweichroute f, die jedoch nur dann durchgeführt werden können, wenn keine zusätzlichen Randbedingungen verletzt werden bzw. wenn die Route f in eine unter Sicherheitsaspekten gleiche oder bevorzugt günstigere Wertungskategorie fällt als die momentan eingeschlagene Route e. Im Ausführungsbeispiel ist die Route f jedoch keine ausführbare Alternative zur Route e, da die Route f auf die Gegenfahrbahn führt.

Im Falle eines Ausfalls der eine automatische Lenkung bewirkenden Lenk-Stelleinrichtung ist ein selbsttätiges laterales Ausweichen und Umfahren eines Hindernisses nicht möglich. In diesem Fall wird zweckmäßig die Fahrzeug-Längsdynamik gemäß einer hinterlegten Ersatzstrategie beeinflusst, insbesondere wird eine maximale Verzögerung durch Beaufschlagung der Fahrzeugbremse und/oder des Motors erzeugt, um nach dem Erkennen des Ausfalls der Lenk-Stelleinrichtung und einem erkannten Hindernis das Fahrzeug so schnell wie möglich bis zum Stillstand abzubremsen. Diese Strategie kann auch generell angewandt werden, wenn eine Lenk-Stelleinrichtung im Fahrzeug nicht vorhanden ist.

In einer weiteren bevorzugten Ausführung ist im Fahrzeug ein Mitteilungssystem vorgesehen, insbesondere ein grafisches Mitteilungssystem, zur Darstellung der tatsächlichen Fahrzeugposition -und der Sollposition, welche gemäß der Ausweichroute eingeschlagen werden soll. Insbesondere für den Fall, dass das selbsttätige Befahren der Ausweichroute als Folge einer beeinträchtigten Funktion des Brems- und Lenksystems nicht oder nicht vollständig möglich ist, erhält der Fahrer über das Mitteilungssystem ausreichende Informationen über die optimale Fahrroute, die dementsprechend vom Fahrer manuell eingeschlagen werden kann.

In einer weiteren Ausführung ist dem Brems- und Lenksystem eine Speichereinheit zugeordnet, in der Daten des Brems- und Lenksystems permanent oder temporär speicherbar sind. Es werden zweckmäßig sowohl die der Auslösung des automatischen Brems- und/oder Lenkvorganges zugrunde liegenden Daten als auch die vom Brems- und Lenksystem erzeugten Daten gespeichert, um im Nachhinein sowohl die Datenbasis, auf deren Grundlage das Brems- und Lenksystem Stellsignale erzeugt, als auch die erzeugten Stellsignale selbst bzw. deren Auswirkung feststellen und beurteilen zu können. Es können insbesondere sowohl Sollgrößen als auch Istgrößen in der Speichereinheit abgelegt werden. Auf der Grundlage der gespeicherten Daten können das Verhalten des Bremssystems und das Auftreten eines Fehlers im Brems- und Lenksystem rekonstruiert werden. Außerdem können Entscheidungen des Fahrers, welche Entscheidungen oder Vorschlägen des Brems- und Lenksystems zuwider laufen, im Nachhinein auf Richtigkeit überprüft werden. Die Daten können in der Speichereinheit für eine begrenzte Zeit oder unbegrenzt gespeichert werden. Im Falle einer auf ein bestimmtes Speicherintervall vorgegebenen zeitlichen Begrenzung werden vorteilhaft nach dem ersten Durchlauf des Speicherintervalls fortlaufend Daten aus dem verstrichenen Speicherintervall von nachfolgenden Daten überschrieben.

Es kann auch vorteilhaft sein, im Fahrzeug ein Positionsbestimmungssystem zur Bestimmung der augenblicklichen Absolutposition vorzusehen, beispielsweise ein satellitengestütztes Positionsbestimmungssystem GPS. In Verbindung mit einer im Fahrzeug mitzuführenden elektronischen Straßenkarte, welche in digitalisierter Form Informationen über die Topografie der aktuell befahrenen Straße und der umliegenden Umgebung enthält, erhält man ein Navigationssystem, mit dem zusätzliche Kriterien bei der Wahl der Ausweichroute berücksichtigt werden können, indem unabhängig von der Erkennung von Hindernissen über die im Fahrzeug mitgeführte Sensoreinheit topografische bzw. topologische Gegebenheiten berücksichtigt werden, die aus der elektronischen Karte hervorgehen. Hierbei wird zweckmäßig die absolute Fahrzeugposition mit Hilfe des Positionsbestimmungssystems bestimmt und in die elektronische Straßenkarte übertragen, aus der der Straßenverlauf und insbesondere die seitliche Straßenbegrenzung sowie feststehende Hindernisse bekannt sind, was als Randbedingung im Sinne eines nicht zu befahrenden oder nur unter besonderen Umständen zu befahrenden Gebiets bei der Bestimmung der Ausweichroute zu berücksichtigen ist. Der Straßenverlauf kann gegebenenfalls auch dreidimensional abgespeichert und bei der Auswahl der geeigneten Route als räumliche Kurve berücksichtigt werden.

In Fig. 2 ist ein Fahrzeug 1, welches über ein automatisches Brems- und Lenksystem verfügt, auf einer Fahrbahn 2 eingezeichnet. Das Fahrzeug 1 ist in der Lage, mit Hilfe seiner Sensorik ein vor ihm liegendes Hindernis 3 auf der Fahrbahn 2 zu erkennen und eine das Hindernis umgehende Ausweichroute zu bestimmen und der gewählten Ausweichroute selbsttätig durch Beaufschlagung der Lenkaggregate und der Bremsaggregate sowie gegebenenfalls auch sonstiger Motoraggregate zu folgen. Das Fahrzeug 1 verfügt darüber hinaus über ein Navigationssystem, welches ein Positionsbestimmungssystem zur Bestimmung der augenblicklichen Absolutposition des Fahrzeugs und eine elektronische Straßenkarte umfasst, in welcher die Topographie der aktuell befahrenen Straße sowie der umliegenden Umgebung abgespeichert ist. Bei dem Positionsbestimmungssystem handelt es sich zweckmäßig um ein satellitengestütztes Ortungssystem.

Über die Bestimmung der Absolutposition des Fahrzeugs 1 und einen Vergleich mit der elektronischen Straßenkarte können topologische Gegebenheiten und Besonderheiten im aktuellen Straßenverlauf und der umliegenden Umgebung bei der Ermittlung der optimalen Ausweichroute als zusätzliche Randbedingungen berücksichtigt werden. Unter Berücksichtigung des topologischen Streckenverlaufs sowie des Hindernisses 3 auf der Fahrbahn 2 kann eine Fläche 7 ermittelt werden, welche eine zulässigen Aufenthaltsbereich für das Fahrzeug 1 mit sämtlichen möglichen Ausweichrouten bzw. Trajektorien enthält, denen das Fahrzeug 1 theoretisch folgen kann, um sowohl das Hindernis 3 zu umgehen als auch einen ausreichenden Abstand zur Fahrbahn-Seitenbegrenzung 8 oder sonstigen, aus der Straßenkarte zu entnehmenden Hindernissen einhalten zu können.

Aus der Kenntnis des Streckenverlaufs, der mit Hilfe des Navigationssystems bekannt ist, können Randbedingungen bei der Bestimmung und Ausführung der Fahrzeugbewegung sowohl auf Lage- als auch gegebenenfalls auf Geschwindigkeits- und/oder Beschleunigungsebene berücksichtigt werden. Dadurch ist eine vorausschauende selbsttätige Fahrweise möglich, weil der zweidimensionale oder gegebenenfalls auch der dreidimensionale Steckenverlauf im Hinblick auf positive und negative Beschleunigungskräfte, die in Längs- und in Querrichtung auf das Fahrzeug einwirken, berücksichtigt werden kann.

Aus der Fläche 7 der zulässigen Fahrzeugbewegung wird eine einzelne Flächenlinie oder Raumlinie bzw. Trajektorie als Sollwertverlauf bzw. als Solltrajektorie für das Fahrzeug ermittelt. Die Auswahl der Solltrajektorie kann wiederum unter Berücksichtigung von Optimierungskriterien bzw. Randbedingungen erfolgen, wobei in einfachster Näherung als Solltrajektorie diejenige Trajektorie gewählt wird, die in der Mitte der Fläche 7 der zulässigen Fahrzeugbewegung liegt.

Auf die Solltrajektorie 9 können Ankerpunkte 10 gesetzt werden, welche als mathematischer Ort für ein im Brems- und Lenksystem simuliertes, dynamisches Fahrzeugmodell dienen. Aus diesem dynamischen Fahrzeugmodell können Fahrzeuggrößen ermittelt werden, welche das Fahrverhalten des realen Fahrzeuges widerspiegeln. Wird bei der Simulation festgestellt, dass das Fahrzeug bei Beibehaltung des gegenwärtigen Zustandes in eine kritische Situation geraten kann, so können im Brems- und Lenksystem Eingriffe durchgeführt werden, um eine derartige Verfahrenssituation zu vermeiden, beispielsweise eine Reduzierung der Fahrzeuggeschwindigkeit und/oder eine Neubestimmung der Solltrajektorie, die einen im Hinblick auf den gefährlichen Fahrzeugzustand günstigeren Verlauf der auf das Fahrzeug wirkenden Beschleunigungen und Kräfte ergibt.

**Patentansprüche**

1. Automatisches Brems- und Lenksystem für ein Fahrzeug, mit einer Sensoreinheit zur Erfassung von Fahrzeug-Zustandsgrößen und Fahrzeug-Kenngrößen sowie zur Erfassung von Umgebungsbedingungen, mit einer Regel- und Steuereinheit, in welcher in Abhängigkeit der Fahrzeug-Zustandsgrößen und der Umgebungsbedingungen Stellsignale erzeugbar sind, welche Stelleinrichtungen im Fahrzeug zur Einstellung der Fahrzeugbremse und der Fahrzeuglenkung zuführbar sind, wobei im Falle eines Hindernisses (3) im Fahrweg des Fahrzeugs die Distanz zwischen der aktuellen Fahrzeugposition und dem Hindernis sowie der voraussichtliche Bremsweg zum Halten des Fahrzeugs bestimmt wird und gemäß einer hinterlegten. Ausweichstrategie selbsttätig ein Ausweichweg (b, d) zur Umfahrung des Hindernisses (3) gefahren wird, **dadurch gekennzeichnet,**

   - **dass** für den Fall, dass im Ausweichweg (b, d) ein weiteres Hindernis (4) liegt, die Ausweichstrategie zur Berechnung eines alternativen Ausweichwegs (e) nochmals angewandt wird,
   - **dass** für den Fall, dass ein kollisionsfreier Ausweichweg nicht auffindbar ist, unter mehreren Alternativen derjenige Ausweichweg (d, e) gewählt wird, bei dem die Differenz ($\Delta s_1$, $\Delta s_2$) von verbleibendem Bremsweg ($s_B$) und verbleibender Distanz ($s_{H1}$, $s_{H2}$) zum Hindernis (4, 5) im jeweiligen Ausweichweg (d, e) am geringsten ist.

2. Brems- und Lenksystem nach Anspruch 1,
**dadurch gekennzeichnet,**
**dass** in der Ausweichstrategie Randbedingungen zu berücksichtigen sind, die über die Sensoreinheit zu erfassen sind und die charakteristische Merkmale der Umgebung beschreiben.

3. Brems- und Lenksystem nach Anspruch 2,
**dadurch gekennzeichnet,**
**dass** die Hindernisse in Kategorien eingeteilt werden, wobei Ausweichwege ausscheiden, die zu einer Kollision mit einer definierten Kategorie von Hindernissen führen.

4. Brems- und Lenksystem nach Anspruch 2 oder 3,
**dadurch gekennzeichnet,**
**dass** im Falle alternativer Ausweichwege derjenige Ausweichweg gewählt wird, der nicht auf eine Gegenfahrbahn führt.

5. Brems- und Lenksystem nach einem der Ansprüche 1 bis 4,
**dadurch gekennzeichnet,**
**dass** die in Querrichtung zur Fahrzeugrichtung zu messende Breite des Hindernisses bestimmt wird und die Mindest-Lateralkomponente ($y_{min}$) des Ausweichwegs bestimmt wird aus der Addition von halber Hindernisbreite ($b_H$) und halber Fahrzeugbreite ($b_F$).

6. Brems- und Lenksystem nach einem der Ansprüche 1 bis 5,
**dadurch gekennzeichnet,**
**dass** die Lateralkomponente (y) des Ausweichwegs bestimmt wird gemäß der Klothoide

$$y = \int ( v^2(t)\, \dot{\Theta}(t)\, t^2 )/L \, dt \, ,$$

wobei mit

v     die Fahrzeuggeschwindigkeit,
t     die Zeit
$\dot{\Theta}$     die Lenkgeschwindigkeit,
L     der Radstand

bezeichnet wird.

7. Brems- und Lenksystem nach einem der Ansprüche 1 bis 6,
**dadurch gekennzeichnet,**
**dass** im Falle eines Ausfalls der Lenk-Stelleinrichtung ein die Fahrzeug-Längsdynamik beeinflussendes Aggregat gemäß einer vorgegebenen Ersatzstrategie beaufschlagt wird.

8. Brems- und Lenksystem nach Anspruch 7,
**dadurch gekennzeichnet,**
**dass** das Fahrzeug durch Aktivierung der Fahrzeugbremse und/oder der Motorbremse mit maximaler Verzögerung verzögert wird.

9. Brems- und Lenksystem nach einem der Ansprüche 1 bis 8,
**dadurch gekennzeichnet,**
**dass** im Fahrzeug eine grafische Anzeige zur Darstellung der tatsächlichen Fahrzeugposition und der gemäß der Ausweichstrategie ermittelten Sollposition vorgesehen ist.

10. Brems- und Lenksystem nach einem der Ansprüche 1 bis 9,
**dadurch gekennzeichnet,**
**dass** dem Brems- und Lenksystem eine Speichereinheit zugeordnet ist und dass in der Speichereinheit zumindest ein Teil der für die automatische Auslösung des Brems- und/oder Lenkvorgangs relevanten Daten und/oder zumindest ein Teil der vom Brems- und Lenksystem erzeugten Daten speicherbar ist.

11. Bremssystem nach Anspruch 10,
**dadurch gekennzeichnet,**
**dass** ein Teil der Daten nur für einen begrenzten, vorgegebenen Zeitabschnitt vor dem letzten Stillstand des Fahrzeugs in der Speichereinheit gespeichert wird.

12. Bremssystem nach Anspruch 10 oder 11,
**dadurch gekennzeichnet,**
**dass** ein Teil der Daten ohne Zeitbegrenzung in der Speichereinheit gespeichert wird.

13. Brems- und Lenksystem nach einem der Ansprüche 1 bis 12,
**dadurch gekennzeichnet,**
**dass** ein Positionsbestimmungssystem zur Bestimmung der augenblicklichen Position des Fahrzeugs vorgesehen ist, insbesondere ein satellitengestütztes Positionsbestimmungssystem.

14. Brems- und Lenksystem nach einem der Ansprüche 1 bis 13,
**dadurch gekennzeichnet,**
**dass** eine elektronische Straßenkarte vorgesehen ist, welche in digitalisierter Form Informationen über die Topografie der aktuell befahrenen Straße und der umliegenden Umgebung enthält.

15. Bremssystem nach Anspruch 13 und 14,
**dadurch gekennzeichnet,**
**dass** die Fahrzeugposition in die elektronischen Straßenkarte eintragbar ist und dass aus der Fahrzeugposition in der Straßenkarte Randbedingungen erzeugbar sind, welche in der Ausweichstrategie zu berücksichtigen sind.

**Claims**

1. Automatic braking and steering system for a vehicle, with a sensor unit for recording vehicle status values and vehicle characteristic values as well as for recording environmental conditions with a regulating and control unit, in which depending upon the vehicle status values and the environmental conditions, adjustment signals can be produced which can be fed to adjustment devices in the vehicle for the adjustment of the vehicle brake and of the vehicle steering wherein in the event of an obstacle (3) in the travel path of the vehicle the distance between the current vehicle position and the obstacle as well as the probable brake path for stopping the vehicle is determined and according to a stored deviation strategy a deviation path (b, d) is followed in order to drive around the obstacle (3) **characterised in that**

   - in the event of a further obstacle (4) lying in the deviation path (b, d) the deviation strategy is used once again to calculate an alternative deviation path (e),
   - in the event of a collision-free deviation path not being located, among several alternatives the deviation path (d, e) is selected wherein the difference ($\Delta S_1$, $\Delta S_2$) of the remaining brake path ($S_B$) and the remaining distance ($S_{H1}$, $S_{H2}$) to the obstacle (4, 5) is lowest in the respective deviation path (d, e).

2. Braking and steering system according to claim 1 **characterised in that** in the deviation strategy secondary conditions are to be taken into consideration which are to be recorded via the sensor unit and which describe the characteristic features of the environment.

3. Braking and steering system according to claim 2 **characterised in that** the obstacles are divided into categories wherein deviation paths are excluded which lead to a collision with a defined category of obstacles.

4. Braking and steering system according to claim 2 or 3 **characterised in that** in the case of alternative deviation paths the deviation path is selected which does not lead to a counter travelling lane.

5. Braking and steering system according to one of the claims 1 to 4 **characterised in that** the breadth of the obstacle to be measured in lateral direction to the vehicle direction is determined and the minimum lateral component ($Y_{min}$) of the deviation path is determined from the addition on account of obstacle breadth and on account of vehicle breadth ($b_H$).

6. Braking and steering system according to one of the claims 1 to 5 **characterised in that** the lateral component (y) of the deviation path is determined according to the mathematical operation:

$$y = \int (V_2(t) \, \dot{\Theta}(t) \, t_2 / L \, dt$$

   wherein

   $v$ = the vehicle speed
   $t$ = the time
   $\dot{\Theta}$ = the steering speed
   $L$ = the status of the wheels

7. Braking and steering system according to one of the claims 1 to 6 **characterised in that** in the event of failure of the steering / adjustment device a unit influencing the vehicle longitudinal dynamics is impacted according to a pre-specified replacement strategy.

8. Braking and steering system according to claim 7 **characterised in that** the vehicle is delayed through activation of the vehicle brake and / or the engine brake with maximum delay.

9. Braking and steering system according to one of the claims 1 to 8 **characterised in that** in the vehicle a graphic indication for the representation of the actual vehicle position and the reference position determined in accordance with the deviation strategy is provided.

10. Braking and steering system according to one of the claims 1 to 9 **characterised in that** a storage unit is assigned to the braking and steering system and that in the storage unit at least a part of the data relevant for the automatic triggering of the braking and / or steering process can be stored and / or at least a part of the data produced by the braking and steering system.

11. Braking system according to claim 10 **characterised in that** a part of the data is stored in the storage unit only for a limited, pre-specified interval of time before the last standstill of the vehicle.

**12.** Braking system according to claim 10 or 11 **characterised in that** a part of the data is stored without time limitation in the storage unit.

**13.** Braking and steering system according to one of the claims 1 to 12 **characterised in that** a position determining system for the purpose of determining the momentary position of the vehicle is provided, in particular a satellite-supported position determining system.

**14.** Braking and steering system according to one of the claims 1 to 13 **characterised in that** an electronic roadmap is provided which contains in digital form information concerning the topography of the street currently being travelled on and the surrounding area.

**15.** Braking system according to claim 13 and 14 **characterised in that** the vehicle position can be entered into the electronic roadmap and that from the vehicle position in the roadmap secondary conditions can be produced which are to be taken into consideration in the deviation strategy.

**Revendications**

**1.** Système automatique de freinage et de direction pour un véhicule automobile, comportant une unité de capteurs pour détecter des grandeurs d'état du véhicule automobile et des grandeurs caractéristiques du véhicule automobile ainsi que pour détecter des conditions de l'environnement, équipé d'une unité de régulation et de commande dans laquelle, en fonction des grandeurs d'état du véhicule automobile et des conditions de l'environnement, des signaux de réglage peuvent être générés qui peuvent être conduits vers des dispositifs de réglage dans le véhicule automobile pour le réglage du frein du véhicule automobile et de la direction du véhicule automobile, où, dans le cas d'un obstacle (3) sur le chemin du véhicule automobile, la distance entre la position actuelle du véhicule automobile et l'obstacle ainsi que la distance de freinage prévue pour arrêter le véhicule automobile sont déterminées et, selon une stratégie d'évitement en réserve, un chemin d'évitement (b,. d) est automatiquement emprunté pour contourner l'obstacle (3), **caractérisé en ce que**,

- dans le cas où un autre obstacle (4) figure dans le chemin d'évitement (b, d), la stratégie d'évitement pour le calcul d'un chemin d'évitement (e) alternatif est de nouveau appliquée,

- dans le cas où un chemin d'évitement sans collision ne peut être déterminé, est choisi entre plusieurs possibilités celui des chemins d'évitement (d, e) pour lequel la différence ($\Delta$s1, $\Delta$s2) de distance de freinage (SB) restante et la distance restante (sH1, sH2) par rapport à l'obstacle (4, 5) dans chacun des chemins d'évitement (d, e) est la plus faible.

**2.** Système de freinage et de direction selon la revendication 1, **caractérisé en ce que** des conditions marginales sont à prendre en compte dans la stratégie d'évitement qui sont à détecter par l'unité de capteurs et qui décrivent des caractéristiques distinctives de l'environnement.

**3.** Système de freinage et de direction selon la revendication 2, **caractérisé en ce que** les obstacles sont répartis en catégories, étant rejetés les chemins d'évitement qui conduisent à une collision avec une catégorie définie d'obstacles.

**4.** Système de freinage et de direction selon la revendication 2 ou 3, **caractérisé en ce que**, dans le cas où des chemins d'évitement alternatifs, est choisi celui des chemins d'évitement qui ne conduit pas vers une voie de circulation inverse.

**5.** Système de freinage et de direction selon l'une quelconque des revendications 1 à 4, **caractérisé en ce que**, en direction transversale à la direction du véhicule automobile, une largeur à mesurer de l'obstacle est déterminée et la composante latérale minimale (ymin) du chemin d'évitement est déterminée de l'addition de la demi-largeur de l'obstacle (BH) et de la demi-largeur du véhicule automobile (BF).

**6.** Système de freinage et de direction selon l'une quelconque des revendications 1 à 5, **caractérisé en ce que** la composante latérale (y) du chemin d'évitement est déterminée selon la clothoïde

$$y = \int ( v^2 (t)\ \Theta\ (t)\ t^2 )\ /\ L\ dt,$$

où v désigne la vitesse du véhicule automobile,
t, le temps,
$\Theta$, la vitesse de direction,
L, l'état de roue.

**7.** Système de freinage et de direction selon l'une quelconque des revendications 1 à 6, **caractérisé en ce que**, dans le cas d'une panne du dispositif de réglage de direction, un ensemble influant sur la dynamique longitudinale du véhicule automobile est mis en oeuvre en fonction d'une stratégie de rechange prédéfinie.

8. Système de freinage et de direction selon la revendication 7, **caractérisé en ce que** le véhicule est ralenti selon un ralentissement maximal par l'activation du frein du véhicule automobile et/ou du frein moteur.

9. Système de freinage et de direction selon l'une quelconque des revendications 1 à 8, **caractérisé en ce qu'**un affichage graphique est prévu dans le véhicule automobile pour représenter la position réelle du véhicule automobile et la position de consigne déterminée selon la stratégie d'évitement.

10. Système de freinage et de direction selon l'une quelconque des revendications 1 à 9, **caractérisé en ce qu'**une unité de stockage est associée au système de freinage et de direction et qu'au moins une partie des données pertinentes pour le déclenchement automatique du processus de freinage et/ou de direction et au moins une partie des données générées par le système de freinage et de direction peuvent être stockées dans l'unité de stockage.

11. Système de freinage selon la revendication 10, **caractérisé en ce qu'**une partie des données n'est stockée dans l'unité de stockage que pendant un intervalle de temps prédéfini, limité, avant la dernière immobilisation du véhicule.

12. Système de freinage selon la revendication 10 ou 11, **caractérisé en ce qu'**une partie des données est stockée sans limitation de temps dans l'unité de stockage.

13. Système de freinage et de direction selon l'une quelconque des revendications 1 à 12, **caractérisé en ce qu'**un système de détermination de position pour déterminer la position du moment du véhicule automobile est prévu, en particulier un système de détermination de position reposant sur des satellites.

14. Système de freinage et de direction selon l'une quelconque des revendications 1 à 13, **caractérisé en ce qu'**une carte routière électronique est prévue qui contient sous forme numérique des informations sur la topographie de la route actuellement empruntée et de l'environnement environnant.

15. Système de freinage selon les revendications 13 et 14, **caractérisé en ce que** la position du véhicule automobile peut être introduite dans la carte routière électronique et que des conditions marginales peuvent être générées à partir de la position du véhicule automobile dans la carte routière, qui sont à prendre en compte dans la stratégie d'évitement.

Fig. 1

Fig. 2